# EUROPÄISCHE PATENTSCHRIFT

(11) **EP 1 884 541 B1**
(45) Veröffentlichungstag und Bekanntmachung des Hinweises auf die Patenterteilung: **24.09.2008**
(21) Anmeldenummer: 07112432.5
(22) Anmeldetag: 13.07.2007
(51) Int. Cl.: C08L 83/04, C08J 3/20

(54) **Kontinuierliches Verfahren zur Herstellung von vernetzbaren Organopolysiloxanmassen**
Continuous process for producing crosslinkable organopolysiloxane compositions
Procédé continu destiné à la fabrication de masses polysiloxane organiques réticulables

(30) Priorität: 03.08.2006 DE 102006036303
(43) Veröffentlichungstag der Anmeldung: 06.02.2008
(73) Patentinhaber: Wacker Chemie AG, 81737 München (DE)
(72) Erfinder: Schöley, Peter, 01665 Diera-Zehren (DE); Scheim, Uwe, Dr., 01640 Coswig (DE); Lau, Steffen, 01612 Nünchritz (DE)
(74) Vertreter: Budczinski, Angelika

(56) Entgegenhaltungen:
- EP-A1- 1 375 567
- WO-A-02/44247
- DE-A1- 10 146 395

## Beschreibung

Die Erfindung betrifft ein Verfahren zur kontinuierlichen Herstellung von bei Raumtemperatur vernetzbaren Organopolysiloxanmassen in einem Mischer mit einer aus Rotor-Stator-System bestehenden Mischzone.

Einkomponentige Organopolysiloxanmassen, die unter Ausschluss von Feuchtigkeit lagerfähig sind und unter Zutritt von Feuchtigkeit bei Raumtemperatur vernetzen, sog. RTV-1-Massen, sind bereits seit langem bekannt.

Für die Herstellung von RTV-1-Massen sind verschiedene Verfahren beschrieben. Wegen der hohen Produktivität sind kontinuierliche Verfahren besonders bevorzugt. Das dabei zu lösende Problem ist insbesondere die kontinuierliche und homogene Einmischung von Füllstoffen in die hochviskosen Polymerkomponenten, insbesondere dann, wenn es sich um verstärkende Füllstoffe mit großen Oberflächen handelt. Die Mischungsherstellung soll so erfolgen, dass im fertigen Produkt keine größeren Füllstoffpartikel mehr sichtbar sind. Eine weitere Schwierigkeit bereitet das mit den Füllstoffen eingetragene Wasser, welches dann, wenn die Mischung nicht homogen ist, durch lokale Überkonzentration des Wassers auch noch mehrere Tage nach der Mischungsherstellung zur Bildung von Inhomogenitäten durch Vernetzung der RTV-1-Mischung um die nicht homogen eingemischten Füllstoffpartikel herum führen kann. So wird beispielsweise in der EP-B-234 226 in einem ersten Schritt ein Teil der Bestandteile in einem kontinuierlich arbeitenden geschlossenen Mischer vereinigt und in einem zweiten Schritt in einem oszillierenden Pilgerschrittkneter die restlichen Bestandteile zudosiert und die Masse in diesem Kneter homogenisiert. Um Reaktionszeiten zwischen den einzelnen Mischschritten zu ermöglichen, wurde darüber hinaus ein weiteres dreistufiges Verfahren entwickelt und in EP-B-940 445 beschrieben. In EP-B-739 652 wird ein Verfahren beschrieben, das ohne eine solche Reaktionszeit auskommt, aber darauf angewiesen ist, dass das in der Mischung enthaltene Wasser, welches über die Rohstoffe eingetragen wird, in einem der Mischungsherstellung nachgeschalteten Schritt entfernt werden muss. Da sich das Wasser in den Compounds noch nachweisen lässt, ist offenbar die Einmischung der Füllstoffe mit dem verwendeten Aggregat nicht ausreichend. Die Mischung enthält nicht vollständig benetzte Füllstoffpartikel, in denen sich das Wasser befindet. Wenn die Mischung vollständig ist, dann reagiert das Wasser mit dem Vernetzer irreversibel und ließe sich somit nicht mehr nachweisen.

Ein weiteres, in EP-B-688 598 beschriebenes, Verfahren benutzt einen speziell konstruierten, aus zwei Mischkammern bestehenden Mischer, bei dem zunächst eine Mischung aus Flüssigkeiten und einem Pulver in einer ersten, oberen Mischkammer hergestellt wird, worauf in der zweiten, unteren Mischkammer das Mischgut zum Zwecke der Homogenisierung durch ein zweites unabhängiges Mischorgan nochmals stark geschert wird und weitere flüssige Komponenten zugemischt werden.

In EP-A-1 008 613 wird die Verwendung einer Mischturbine mit axialem Fluss beschrieben. Diese Mischturbine wurde bereits in EP-B-234 226 in Kombination mit einem Pilgerschrittkneter verwendet. Die Mischergebnisse mittels eines solchen Mischers sind zwar ausgezeichnet, ein wesentlicher Nachteil besteht jedoch darin, dass diese Art von Mischern nicht selbstreinigend sind, das heißt, dass im Inneren des Mischers sich Beläge aus Füllstoff und Flüssigkeit bilden, die bereits bei mehr als 24-stündigem Betrieb zu einer Verschlechterung der Dichtmassenqualität durch Füllstoffpartikel führt. Dieses Problem lässt sich im Allgemeinen nur durch häufiges regelmäßiges Reinigen der Mischturbine lösen.

Des Weiteren sind z.B. aus US-A-3 194 540 Mischer bekannt, die nach dem Rotor-Stator-Prinzip arbeiten. Derartige Mischer werden sowohl zur Emulsionsherstellung, als auch zum Einmischen von Feststoffen in Flüssigkeiten benutzt. Bei diesen Geräten rotiert ein Rotor innerhalb eines stillstehenden Stators. Der Stator besitzt Schlitze, die in ihrer Breite variabel sein können. Der Rotor kann ebenfalls derartige Schlitze besitzen, die durch evolutenförmige Förderelemente ergänzt sein können. Es können auch nur die Förderelemente vorhanden sein. Der Rotor saugt das Material an und schleudert es radial gegebenenfalls durch seine und die Schlitze des Stators nach außen. Dabei wirken die Statorzähne, die dessen Schlitze begrenzen, als Aufprallfläche und der Spalt zwischen Rotor und Stator führt zur Scherung. Diese Mischer sind in der Regel so aufgebaut, dass man bis zu drei Rotor-Stator-Paare hintereinander einbauen kann, jeweils mit unterschiedlichen Schlitzbreiten. Je anspruchsvoller die Dispergieraufgabe ist, desto mehr Werkzeuge mit engeren Schlitzbreiten baut man ein. DE-B 101 46 395 offenbart beispielsweise ein solches Mischsystem zur Herstellung von wasserfreien RTV-1-Massen auf Basis von Polydiorganosiloxanen. Ein Nachteil des Verfahrens besteht jedoch darin, dass es weitgehend unflexibel ist und nicht schnell an veränderte Mischaufgaben angepasst werden kann.

Gegenstand der Erfindung ist ein Verfahren zur kontinuierlichen Herstellung von RTV-1-Massen, bei dem in einem Schritt bei einmaligem Durchgang durch die aus einem Rotor-Stator-System bestehende Mischzone eines Mischers im Wesentlichen lineare Organosiliciumverbindung mit mindestens zwei an Silicium gebundenen kondensationsfähigen Gruppen (A), Füllstoff (B) und gegebenenfalls weitere Bestandteile zusammengemischt werden, wobei der Druck am Auslass des Mischaggregates um mindestens 100 hPa größer ist als am Einlass des Mischaggregats.

Im Rahmen der vorliegenden Erfindung sollen unter der Bezeichnung "kondensationsfähige" Reste auch solche Reste verstanden werden, die einen gegebenenfalls vorangehenden Hydrolyseschritt miteinschließen.

Der Eintrag von Organosiliciumverbindung (A), Füllstoff (B) sowie der gegebenenfalls eingesetzten weiteren Bestandteile erfolgt bevorzugt beim Druck der umgebenden Atmosphäre, also etwa zwischen 900 und 1100 hPa, besonders bevorzugt zwischen 950 und 1050 hPa.

Bei dem erfindungsgemäßen Verfahren werden die eingesetzten Komponenten bevorzugt über die Einlassöffnung von oben im freien Fall auf den sich drehenden Rotor gegeben, wobei die Komponenten einzeln oder als beliebige Vormischungen eingesetzt werden können. Zum Beispiel kann Organosiliciumverbindung (A) mit einem Teil der gegebenenfalls eingesetzten weiteren Mischungsbestandteile vorgemischt sein und mit Feststoff (B) sowie gegebenenfalls weiteren Mischungsbestandteilen auf den sich drehenden Rotor gegeben werden. Die Einlassöffnung hat bevorzugt einen Durchmesser von mehr als 10 cm, besonders bevorzugt 20 bis 200 cm. Der Durchmesser des Rotors beträgt bevorzugt mehr als 10 cm, besonders bevorzugt 15 bis 200 cm, wobei der Durchmesser des Rotors stets größer sein sollte als der Durchmesser der Einlassöffnung. Rotor und Stator können beliebig viele Zähne und Schlitze von beliebiger Größe und Form aufweisen. Bevorzugt sind mehr als 5 Zähne mit einer Höhe von mindestens 1 cm und Schlitze von nicht mehr als 5 cm Breite. Weiterhin bevorzugt sind Rotoren mit evolutenförmigen Förderelementen. Es können auch mehrere Rotor-Stator-Paare nacheinander angeordnet sein.

Es kann von Vorteil sein, wenn Organosiliciumverbindung (A) gegebenenfalls im Gemisch mit weiteren Bestandteilen außer (B) durch mehrere seitliche Öffnungen eines bevorzugt zylindrischen Aufsatzes zudosiert wird und an der Innenseite der Wandung nach unten fließt. Am unteren Ende des Aufsatzes fällt dann Komponente (A) auf den Rotor. Bevorzugt wird der Füllstoff (B) durch den zylindrischen Aufbau von oben in axialer Richtung auf den Rotor geleitet.

In einer bevorzugten Ausführungsform des erfindungsgemäßen Verfahrens können auf einer Drehachse oberhalb des Rotors Mischelemente angeordnet sein, die eine Vorbenetzung des Füllstoffes (B) mit Organosilciumverbindung (A) und gegebenenfalls weiteren Mischungsbestandteilen bewirken. Bevorzugt sind die Mischelemente so ausgebildet, dass der Füllstoff (B) gleichzeitig in Richtung des Rotors gefördert wird.

Durch die vom Rotor erzeugten Zentrifugalkräfte wir das Mischgut nach außen an die Zähne des Stators geschleudert und durch die Schlitze gedrückt. Der Rotor enthält bevorzugt Förderelemente, besonders bevorzugt evolutenförmige Förderelemente, sodass sich ein zusätzlicher Förderstrom durch die Schlitze in Richtung der Auslassöffnung ergibt. Die Drehzahl des Rotors kann auch unabhängig von der Drehzahl der Misch- oder Förderelemente sein, wenn der Rotor einerseits bzw. Misch- und Förderelemente andererseits voneinander getrennt auf verschiedenen Drehachsen angeordnet sind. Bevorzugt ist die Drehzahl des Rotors jedoch gleich der Drehzahl der Förderelemente, besonders bevorzugt sind Misch- und Förderelemente fest auf einer Achse angeordnet.

Bei dem erfindungsgemäßen Verfahren wird die Mischung durch die Auslassöffnung über eine Austragsleitung, die an der Auslassöffnung angebracht ist, ausgetragen. Bei der Austragsleitung kann es sich beispielsweise um ein Rohr oder einen Schlauch handeln.

Bei dem erfindungsgemäßen Verfahren ist der Druck am Auslass des Mischaggregates bevorzugt um mindestens 200 hPa, besonders bevorzugt um 300 hPa bis 3000 hPa, größer als am Einlass des Mischaggregats.

Der erfindungsgemäße Druckunterschied kann auf unterschiedliche, an sich bekannte Art und Weise erreicht werden, wie z.B. durch Aufbau von hydrostatischem Druck, Querschnittsveränderungen der Austragsleitung, Variation der Rotordrehzahl und Steuerung der Förderleistung von Fördereinrichtungen in der Austragsleitung.

Der Druckunterschied zwischen Einlassöffnung und Auslassöffnung des Mischaggregates wird bei konstanter Rotordrehzahl bevorzugt dadurch erreicht, dass dem freien Abfließen des Mischgutes in der Austragsleitung ein entsprechend großer Widerstand entgegengesetzt wird. Dadurch drückt das durch den drehenden Rotor nachgeförderte Mischgut auf das Mischgut in der Austragsleitung. Bei konstanter Drehzahl des Rotors kann der für einen Druckaufbau notwendige Widerstand gegen das freie Abfließen des Mischgutes aus der Auslassöffnung des Mischaggregates erfindungsgemäß zum Beispiel dadurch erhalten werden, dass die Austragsleitung, durch die sich das Mischgut bewegt, durch entsprechende Wahl des Durchmessers, des Querschnittes, der Länge und gegebenenfalls des räumlichen Anstieges so gestaltet wird, dass der erfindungsgemäß notwendige Druckunterschied zwischen Einlassöffnung und Auslassöffnung erhalten wird.

Anpassungen an veränderte Mischaufgaben, wie sie zum Beispiel bei Produktwechsel entstehen, sind bei der einfachen Ausführungsform des räumlichen Anstieges der Auslassleitung jedoch nur sehr schwer durchzuführen.

Eine weitere erfindungsgemäße Ausführungsform besteht daher zum Beispiel im Versperren der Austragsleitung mit Lochblenden. Diese können dann - falls erwünscht - in abgestufter Größe mit der Austragsleitung dauerhaft verbunden oder austauschbar nach der Auslassöffnung angeordnet sein.

Bevorzugt werden Reduzierungen des Querschnittes der Austragsleitung, die schnell verändert werden können, wie Ventile oder, besonders bevorzugt, Kugelhähne, die gegebenenfalls elektronisch gesteuert werden können.

Besonders bevorzugt sind in der Austagsleitung angebrachte elektronisch gesteuerte Fördereinrichtungen, wie Zahnradpumpen oder Schneckenförderer, die ihr Fördervolumen so anpassen, dass der gewünschte Druck an der Auslassöffnung anliegt.

Es bestehen aber nicht nur in der Veränderung des Austragswiderstandes Variationsmöglichkeiten zur Steuerung der Mischzeit-und Intensität, sondern auch in der Regelung der Drehzahl des Rotors.

Die Drehzahl des Rotors wird bevorzugt an die Mischaufgabe angepasst und liegt bevorzugt zwischen 200 und 3000 Umdrehungen pro Minute.

Die Anpassung der Drehzahl ist besonders dann von Vorteil, wenn spezifische rheologische Eigenschaften des Mischgutes aus Komponente (A) aus benetztem, aber noch nicht vollständig dispergiertem hochdispersem Feststoff (B), aus gegebenenfalls weiteren Bestandteilen und aus gasförmigen Komponenten, wie zum Beispiel Luft oder Inertgas, das z.B. mit dem Feststoff (B) eingetragen wurde, die Durchführung der Mischaufgabe erschweren, da diese 3-Phasen-Mischungen nicht nur nichtnewtonsches sondern auch teilweise dillatantes Fließverhalten aufweisen.

Die Lösung der Mischaufgabe kann zum Beispiel überraschenderweise darin gefunden werden, dass eine Verringerung der Rotordrehzahl am ansonsten unveränderten System zu einem höheren Druckunterschied zwischen Eintrags- und Austragsöffnung führt.

Selbstverständlich ist es in einer nicht erfindungsgemäßen Ausführungsform möglich, beispielsweise durch Anlegen von Vakuum an der Auslassöffnung oder durch Druckerhöhung an der Einlassöffnung, Dauer und Intensität der mechanischen Beanspruchung des Mischgutes zu verändern, doch die Füllstoffe werden dann im Allgemeinen nicht ausreichend gut dispergiert.

Das erfindungsgemäße Verfahren wird bei Temperaturen von bevorzugt -20 bis 180°C, besonders bevorzugt 10 bis 80°C, durchgeführt. Es kann jedoch auch bei höheren oder niedrigeren Temperaturen durchgeführt werden, wobei die Temperatur abhängig ist vom Eintrag der Mischenergie. Falls erwünscht, kann das Mischgut vor, während und/oder nach dem Mischprozess beliebig gekühlt bzw. beheizt werden.

Bei dem erfindungsgemäßen Verfahren kann die am Ende der Austragsleitung erhaltene Mischung in einem nachfolgenden Schritt unter geringer Scherwirkung und bei vermindertem Druck, z.B. 10 hPa, entgast und von leicht flüchtigen Bestandteilen befreit werden. Das so erhaltene Produkt kann dann - falls erwünscht - in feuchtigkeitsdichte Gebinde, wie Kartuschen, Hobbocks und Fässer oder Großgebinde, abgefüllt werden.

Bei den kondensationsfähigen Gruppen, welche die erfindungsgemäß eingesetzten, an der Vernetzungsreaktion beteiligten Organosiliciumverbindungen (A) aufweisen, kann es sich um beliebige Gruppen handeln, wie z.B. Hydroxy-, Acetato-, Oximato-, Amino-und Organyloxygruppen.

Bei erfindungsgemäß eingesetzter Komponente (A) kann es sich um alle Organosiliciumverbindungen mit mindestens zwei Si-gebundenen kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡-Strukturen, als auch um Silcarbane, also ≡Si-R"-S≡ -Strukturen mit R" gleich einem zweiwertigen, gegebenenfalls substituierten oder mit Heteroatomen unterbrochenen Kohlenwasserstoffrest oder beliebige Organosiliciumgruppen aufweisende Copolymere handeln.

Bevorzugt handelt es sich bei den erfindungsgemäß eingesetzten Organosiliciumverbindungen (A) um solche enthaltend Einheiten der Formel

RₐY_{b}SiO_{(4-a-b)/2} (I)

,
wobei
- R: gleich oder verschieden sein kann und gegebenenfalls substituierte Kohlenwasserstoffreste, die durch Sauerstoffatome unterbrochen sein können, bedeutet,
- Y: gleich oder verschieden sein kann und kondensationsfähige Reste bedeutet,
- a: 0, 1, 2 oder 3, bevorzugt 1 oder 2, ist und
- b: 0, 1, 2 oder 3, bevorzugt 0, 1 oder 2, besonders bevorzugt 0, ist,
mit der Maßgabe, dass die Summe aus a+b kleiner oder gleich 3 ist und pro Molekül mindestens zwei Reste Y anwesend sind.

Bevorzugt handelt es sich bei Komponente (A) um Organopolysiloxane bestehend aus Einheiten der Formel (I).

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen-und/oder Oxypropyleneinheiten aufgebaut sind, besonders bevorzugt um Alkylreste mit 1 bis 12 Kohlenstoffatomen, insbesondere um den Methylrest. Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl- und der Ethoxyethoxyethylrest oder Chlorpropyl- und Trifluorpropylrest.

Beispiele für zweiwertige Reste R sind der Ethylenrest, Polyisobutylendiylreste und propandiylterminierte Polypropylenglykolreste.

Bei den kondensationsfähigen Gruppen Y, welche die eingesetzten, an der Vernetzungsreaktion beteiligten Organosiliciumverbindungen (A) aufweisen, kann es sich um Hydroxylreste und beliebige über Sauerstoffatom oder Stickstoffatom an Siliciumatom gebundene, gegebenenfalls substituierte Kohlenwasserstoffreste handeln.

Bevorzugt handelt es sich bei Rest Y um Hydroxylrest, Rest -OR¹, wie Methoxy-, Ethoxy-, n-Propoxy-, i-Propoxy-, n-Butoxy-, i-Butoxy-, s-Butoxy-, tert-Butoxy- und 2-Methoxyethoxyrest, wobei R¹ gegebenenfalls substituierte Kohlenwasserstoffreste, die durch Sauerstoffatome unterbrochen sein können, bedeutet, Acyloxyreste, wie der Acetoxyrest, Aminoreste, wie Methylamino-, Dimethylamino-, Ethylamino-, Diethylamino- und Cyclohexylaminorest, Amidoreste, wie N-Methylacetamido- und Benzamidorest, A-minoxyreste, wie der Diethylaminoxyrest, Oximoreste, wie Methylethylketoximo- und Methylisobutylketoximorest, und Enoxyreste, wie der 2-Propenoxyrest.

Beispiele für Reste R¹ sind die für R angegebenen einwertigen Reste.

Bevorzugt handelt es sich bei Rest R¹ um Alkylreste mit 1 bis 12 Kohlenstoffatomen, besonders bevorzugt um den Methyl- oder Ethylrest.

Besonders bevorzugt handelt es sich bei Rest Y um Hydroxylrest, Rest -OR¹ mit R¹ gleich der obengenannten Bedeutung und Acyloxyreste, insbesondere um Acetoxy-, Methoxy- und Ethoxyreste.

Besonders bevorzugt handelt es sich bei erfindungsgemäß eingesetzten Organosiliciumverbindungen (A) um solche der Formeln

Y_{3-f}R_{f}Si -O- (SiR₂-O)ₑ-SiR_{f}Y_{3-f} (II)

und

Y₃-_{f}R_{f}Si-O- (R³-O)ₕ-SiR_{f}Y_{3-f} (III)

,
wobei
R und Y jeweils gleich oder verschieden sein können und eine der oben angegebenen Bedeutungen haben,
R³ gleich oder verschieden sein kann und zweiwertige, gegebenenfalls substituierte Kohlenwasserstoffreste bedeutet,
e gleich 30 bis 3000 ist,
f gleich 0, 1 oder 2 ist und
h gleich 30 bis 1000 ist.

Vorzugsweise ist f gleich 2, wenn Y gleich -OH ist, und f gleich 1 oder 0, wenn Y verschieden -OH ist.

Beispiele für Rest R³ sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, Heptylenreste, Octylenreste, Nonylenreste, Decylenreste, Dodecylenreste und Octadecylenreste; Cycloalkylenreste, wie Cyclopentylenrest, Alkenylenreste, wie der Vinylen-, n-Hexenylen-, Cyclohexenylen-, 1-Propenylen-, Allylen-, Butenylen- und 4-Pentenylenrest; Alkinylenreste, wie der Ethinylen- und Propargylenrest; Arylenreste, wie der Phenylen-, Naphthylen-, Anthrylen- und Phenanthrylenrest; Alkarylenreste, wie o-, m-, p-Tolylenreste, Xylylenreste und Ethylphenylenreste; und Aralkylenreste, wie der Benzylenrest, der α- und der β-Phenylethylenrest, wobei Alkylenreste bevorzugt und Ethylen- und Propylenrest bevorzugt bevorzugt sind.

Beispiele für Organosiliciumverbindungen (A) sind
(AcO) ₂MeSiO [SiMe₂O] ₂₀₀₋₂₀₀₀SiMe (OAc)₂
(AcO)₂ViSiO [SiMe₂O]₂₀₀₋₂₀₀₀SiVi(OAc)₂
(AcO)₂MeSiO[SiMe₂O]₂₀₀₋₂₀₀₀SiVi (OAC) ₂
(MeO)₂MeSiO [SiMe₂O]₂₀₀₋₂₀₀₀SiMe (OMe)₂,
(HO)Me₂SiO[SiMe₂O]₂₀₀₋₂₀₀₀SiMe2(OH),
(EtO)₂MeSiO [SiMe₂O]₂₀₀₋₂₀₀₀SiMe (OEt)₂,
(MeO) ₂ViSiO [SiMe₂O]₂₀₀₋₂₀₀₀SiVi (OMe)₂,
(EtO)₂ViSiO [SiMe₂O]₂₀₀₋₂₀₀₀SiVi(OEt)₂,
(MeO)₂MeSiO[SiMe₂O]₂₀₀₋₂₀₀₀SiVi(OMe)₂,
(EtO)₂(C₆H₁₁NHCH₂)SiO[SiMe₂O]₂₀₀₋₂₀₀₀Si(CH₂NHC₆H₁₁) (OEt)₂,
(MeO)₂MeSi(CH₂)₃O-([CH(CH₃)CH₂]-O)₅₀₋₅₀₀(CH₂)₃SiMe(OMe)₂,
(MeO)₂MeSi(CH₂)₃NH-COO-([CH(CH₃)CH₂]-O)₅₀₋₅₀₀CO-NH-(CH₂)₃SiMe(OMe)₂ und
(MeO)₂MeSiCH₂-NH-COO-([CH(CH₃)CH₂]-O)₅₀₋₅₀₀OC-NH-CH₂SiMe(OMe)₂,
wobei Ac Acetylrest, Me Methylrest, Et Ethylrest und Vi Vinylrest bedeutet.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Silicium- und Kohlenstoffchemie gängigen Methoden hergestellt werden.

Beispiele für Füllstoffe (B) sind nicht verstärkende Füllstoffe mit einer BET-Oberfläche von bis zu 10 m²/g, wie gemahlene Calciumcarbonate, teilweise verstärkende Füllstoffe mit einer BET-Oberfläche von mehr als 10 m²/g, wie gefällte Calciumcarbonate, oder verstärkende Füllstoffe, also Füllstoffe mit einer BET-Oberfläche von mehr als 50 m²/g, wie pyrogen hergestellte Kieselsäure, gefällte Kieselsäure, Ruß wie Furnace- und Acetylenruß und Silicium-Aluminium-Mischoxide großer BET-Oberflächen.

Die erfindungsgemäß eingesetzten Füllstoffe (B) können nach bekannten Verfahren hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei dem erfindungsgemäß eingesetzten Füllstoff (B) um Calciumcarbonate und um pyrogen hergestellte Kieselsäuren.

Vorzugsweise werden im erfindungsgemäßen Verfahren 5 bis 300 Gewichtsteile, besonders bevorzugt 8 bis 200 Gewichtsteile, insbesondere 10 bis 150 Gewichtsteile, Füllstoff (B), jeweils bezogen auf jeweils 100 Gewichtsteile Komponete (A), eingesetzt.

Im erfindungsgemäßen Verfahren können - falls erwünscht - Vernetzer (C) eingesetzt werden. Dabei kann es sich um beliebige, bisher bekannte Vernetzer mit mindestens drei kondensationsfähigen Resten handeln, wie beispielsweise Silane oder Siloxane mit mindestens drei Organyloxygruppen.

Bei den gegebenenfalls eingesetzten Vernetzern (C) handelt es sich vorzugsweise um Organosiliciumverbindungen der Formel

Z_{c}SiR²_{(4-c)} (IV)

,
wobei
R² gleich oder verschieden sein kann und einwertige, gegebenenfalls substituierte Kohlenwasserstoffreste, die durch Sauerstoffatome unterbrochen sein können, bedeutet,
Z gleich oder verschieden sein kann und eine oben für Y genannte Bedeutung ausgenommen Hydroxylgruppe besitzt und
c 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Obwohl in Formel (IV) nicht angegeben, können die erfindungsgemäß gegebenenfalls eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den im erfindungsgemäßen Verfahren gegebenenfalls eingesetzten Vernetzern (C) um Teilhydrolysate von Organosiliciumverbindungen der Formel (IV), so sind solche mit bis zu 10 Siliciumatomen bevorzugt.

Beispiele für Rest R² sind die oben für Rest R genannten einwertigen Beispiele, wobei Kohlenwasserstoffreste mit 1 bis 12 Kohlenstoffatomen bevorzugt und der Methyl- und der Vinylrest besonders bevorzugt sind.

Beispiele für Z sind die für Y angegebenen Beispiele ausgenommen Hydroxylgruppe.

Bevorzugt handelt es sich bei Z um Rest -OR¹ mit R¹ gleich einer der obengenannten Bedeutungen, Acyloxyreste und Oximoreste.

Bevorzugt handelt es sich bei den im erfindungsgemäßen Verfahren gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis(trimethoxysilyl)ethan, Cyclohexylaminomethyltriethoxysilan, Morpholinomethyltrimethoxysilan, 1,2-Bis(triethoxysilyl)ethan, Methyltris-(methylethylketoximo)silan, Vinyltris(methylethylketoximo)silan, Tetrakis-(methylethylketoximo)silan, Methyltriacetoxysilan, Ethyltriacetoxysilan, Vinyltriacetoxysilan, Dimethyldiacetoxysilan, Methylvinyldiacetoxysilan sowie Teilhydrolysate der genannten Organosiliciumverbindungen, wie z.B. Hexaethoxydisiloxan.

Besonders bevorzugt handelt es sich bei den erfindungsgemäß gegebenenfalls eingesetzten Vernetzern (C) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, Methyltris(methylethylketoximo)silan, Vinyltris(methylethylketoximo)silan, Methyltriacetoxysilan, Ethyltriacetoxysilan, Vinyltriacetoxysilan sowie deren Teilhydrolysate, insbesondere um Methyltrimethoxysilan, Vinyltrimethoxysilan, Methyltriethoxysilan, Vinyltriethoxysilan, Methyltris(methylethylketoximo)silan, Vinyltris(methylethylketoximo)silan, Methyltriacetoxysilan, Ethyltriacetoxysilan, Vinyltriacetoxysilan sowie deren Teilhydrolysate.

Die erfindungsgemäß gegebenenfalls eingesetzten Vernetzer (C) sind handelsübliche Produkte bzw. können nach in der Siliciumchemie bekannten Verfahren hergestellt werden.

Falls Vernetzer (C) eingesetzt werden, was bevorzugt ist, handelt es sich um Mengen von vorzugsweise 0,01 bis 20 Gewichtsteilen, besonders bevorzugt 0,5 bis 10 Gewichtsteilen, insbesondere 3 bis 8 Gewichtsteilen, jeweils bezogen auf 100 Gewichtsteile Organosiliciumverbindung (A).

Zusätzlich zu den oben beschriebenen Komponenten (A), (B) und gegebenenfalls (C) können bei dem erfindungsgemäßen Verfahren nun alle weiteren Stoffe eingesetzt werden, die auch bisher in durch Kondensationsreaktion vernetzbaren Massen eingesetzt worden sind, wie z.B. nicht reaktive Siliconöle, organische Weichmacher, feste oder flüssige Siliconharze, Haftvermittler, Katalysatoren, Wasserfänger (sogenannte Scavenger), Stabilisatoren, die beispielsweise die Lagerstabilität und Reaktivität der Mischung beeinflussen, Additive, die die Eigenschaften des noch nicht ausgehärteten oder des ausgehärteten Materials optimieren, Substanzen, die die Reaktivität der Masse steuern, Farbpigmente, Hitzestabilisatoren und Fungizide.

Bei den gegebenenfalls eingesetzten Zusatzstoffen (D) handelt es sich bevorzugt um Katalysatoren, Haftvermittler, Weichmacher, Stabilisatoren, Rheologieadditive, Farbpigmente und Fungizide.

Zusatzstoffe (D) können auch - falls erwünscht - in einem weiteren, nachgeschalteten Verfahrensschritt zugemischt werden.

Alle Mischungsbestandteile können auch - falls erwünscht - in zwei oder mehr Teilmengen aufgeteilt zu verschiedenen Zeitpunkten und gegebenenfalls in Vormischungen zugemischt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

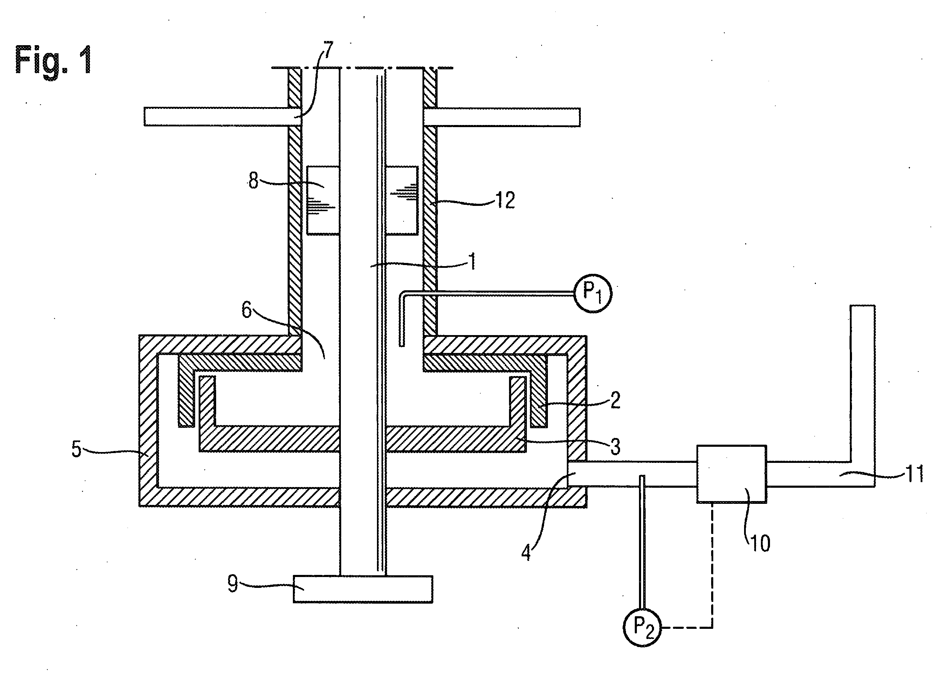

Eine besonders bevorzugte Ausführungsform des erfindungsgemäßen Verfahrens wird anhand von **Fig. 1** erläutert. In eine Rotor-Stator-Mischvorrichtung (5) werden über den Einlass (6) eine Vormischung aus Komponente (A), Vernetzer (C) und Zusatzstoffen (D), wie verschiedenen Weichmachern, und Füllstoff (B) dosiert, wobei die Vormischung durch mehrere seitliche Öffnungen (7) eines bevorzugt zylindrischen Aufsatzes (12) zudosiert wird und dann an der Innenseite der Wandung nach unten fließt. Am unteren Ende des Aufsatzes, der Einlassöffnung (6), fällt dann die Vormischung auf den Rotor (3). Der Rotor (3) wird mit der Rotorachse (1), an der sich Mischelemente (8) befinden, über den Antrieb (9) in Drehung versetzt. Der Füllstoff (B) gelangt durch den zylindrischen Aufbau (12) von oben auf den Rotor. Bei entsprechend großen Füllstoffmengen und schnellen Rotordrehzahlen kann der freie Fall des Füllstoffes behindert sein. Es kommt dann zu einem ebenfalls erfindungsgemäßen Nachrutschen des Füllstoffes. Bevorzugt sind die Mischelemente rechteckig ausgebildet und im Winkel von bevorzugt 30 - 45° zur Rotorachse in Drehrichtung angeordnet. Dadurch ergibt sich gleichzeitig eine Förderung des Füllstoffes zusätzlich zum freien Fall in Richtung Rotor. Während der Abwärtsbewegung des Füllstoffes findet bereits eine Vorbenetzung des Füllstoffes (B) mit der Vormischung durch die Mischelemente (8) statt. Die Mischwerkzeuge der Mischvorrichtung (5) umfassen den Stator (2), welcher Aussparungen, vorzugsweise kammartige Aussparungen, aufweist, und den Rotor (3), welcher Aussparungen, insbesondere kammartige Aussparungen, aufweist und/oder Förderelemente, insbesondere evolutenförmige Förderelemente, besitzt. Zwischen Stator (2) und Rotor (3) befindet sich ein Spalt. Komponente (A), Vernetzer (C), Weichmacher (D) und Füllstoff (B) werden durch den Rotor (3) vermischt und durch die Aussparungen an Rotor (3) und Stator (2) gepresst, wobei die Mischung stark geschert wird. Auf dem Weg zum Auslassöffnung (4) wird dem Produkt keine weitere Mischenergie mehr zugeführt. Hinter der Auslassöffnung (4) ist die Austragsleitung (11) mit der erfindungsgemäßen Bauart zur Einstellung des Fließwiderstandes und gegebenenfalls mit zusätzlichen erfindungsgemäßen technischen Einrichtungen (10) zur Erhöhung des Fließwiderstandes angeordnet. Die Messung der Drücke erfolgt an der Einlassöffnung mit dem Manometer (P₁) und an der Auslassöffnung (4) mit dem Manometer (P₂).

Das erfindungsgemäße Verfahren hat den Vorteil, dass RTV-1-Massen mit einer großen Homogenität bezüglich der Füllstoffeinmischung hergestellt werden können.

Das erfindungsgemäße Verfahren hat den Vorteil, dass RTV-1-Massen mit einer ausgezeichneten Lagerstabilität hergestellt werden können.

Das erfindungsgemäße Verfahren hat den Vorteil, dass die Mischintensität schnell veränderten Mischaufgaben sehr genau angepasst werden kann.

Das erfindungsgemäße Verfahren hat den Vorteil, dass mit hoher Flexibilität unterschiedliche Rohstoffqualitäten des Füllstoffes verarbeitet werden können, beispielsweise auch stark agglomeriertes Material.

Das erfindungsgemäße Verfahren hat den Vorteil, dass der Dispergiergrad des eingesetzten Füllstoffes ganz gezielt eingestellt werden kann.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25°C. Sofern nicht anders angegeben, werden die nachstehenden Beispiele bei einem Druck der umgebenden Atmosphäre, also bei etwa 1000 hPa, und Raumtemperatur, also bei etwa 20° C, bzw. bei einer Temperatur, die sich beim Zusammengeben der Reaktanden bei Raumtemperatur ohne zusätzliche Heizung oder Kühlung einstellt, durchgeführt.

Die Shore-A-Härte wird nach DIN (Deutsche Industrie Norm) 53505 bestimmt.

### Beispiele 1

In ein Rotor-Stator-Mischaggregat (5) wurden über 4 seitliche Öffnungen (7) in einem zylindrischen Aufbau (12) pro Stunde 1000 kg einer Mischung von 71 % eines Polydimethylsiloxans, das statistisch verteilte Diacetoxymethylsilylendgruppen und Diacetoxyvinylsilylendgruppen im Mol-Verhältnis von etwa 1 : 2 aufweist, mit einer Viskosität von 80000 mPas, 23,5 % eines α,ω-Bis-trimethylsiloxypolydimethylsiloxans mit einer Viskosität von 1000 mPas und 5,5 % eines Oligomerengemisches aus Acetoxysilanen (käuflich erhältlich unter der Bezeichnung "Vernetzer ES 24" bei der Wacker Chemie AG, D-München) sowie 62 kg/h einer pyrogenen Kieselsäure mit einer BET-Oberfläche von 150 m²/g (käuflich erhältlich unter der Bezeichnung HDK® V 15 bei der Wacker Chemie AG, D-München) im freien Fall dosiert. Der Rotor (3) besaß 6 evolutenförmige Förderorgane und 6 an der Achse angeordnete Mischflügel. Er wurde mit 1200 Umdrehungen pro Minute betrieben. Der Stator ist mit kammartigen Aussparungen versehen, das heißt, mit 42 Zähnen einer Breite von 13 mm, die sich in einem Abstand von 9 mm befinden. Er hat einen Innendurchmesser von 275 mm.
Auf dem Weg zur Auslassöffnung (4) wurde dem Produkt keine weitere Mischenergie mehr zugeführt. An der Einlassöffnung (6) und in der Austragsleitung ca. 20 cm hinter der Auslassöffnung sind Manometer angebracht. An der Einlassöffnung herrschte der Druck (P₁) der umgebenden Atmosphäre von 1000 hPa. Ein nach dem Manometer in der Austragsleitung installierter Kugelhahn (10) wurde per Hand soweit geschlossen, dass sich an der Auslassöffnung (4) ein Druck (P₂) von 1500 hPa einstellte.

Die aus der Austragsleitung (11) austretende Mischung wurde ohne weitere Förderungseinrichtung in einen Zweischneckenkneter geleitet, wo sie kontinuierlich entlüftet und entgast wurde. Gleichzeitig wurden in dem Zweischneckenkneter pro Stunde 1000 kg des Produktes kontinuierlich mit 0,5 kg einer Mischung aus 20 % Dibutylzinndiacetat und 80 % organischem Weichmacher vermischt.
Abschließend wurde die fertige Masse in feuchtigkeitsdichte Fässer verpackt, wobei gleichzeitig aus einem seitliche Stutzen feuchtigkeitsdichte PE-Kartuschen für Testzwecke abgefüllt wurden.

Es wurde eine homogene Mischung erhalten, die auch bei Lagerung über mehrere Monate in einer 300 ml-PE-Kartusche homogen bleibt. Es bilden sich keine Inhomogenitäten durch lokale Vernetzung der Mischung.

Zur Beurteilung des Aussehens wurden die Massen jeweils auf eine Glasplatte in einer ca. 0,1 mm dicken Schicht aufgetragen:
Note 1: stippenfrei
Note 2: einige kleine Stippen
Note 3: mehrere Stippen

Die Ermittlung der Auspressrate erfolgte aus 310-ml-PE-Kartuschen unter einem Druck von 6,2 bar und einem Düsendurchmesser von 3,0 mm.

Das Aussehen der Mischung war befriedigend.

Die Ergebnisse finden sich in Tabelle 1.

Die Masse bildete nach 20 Minuten bei 23°C und einer relativen Luftfeuchtigkeit von 50 % eine Haut und härtete innerhalb von 7 Tagen zu einem gummielastischen Material mit einer Shore-A-Härte von 18 aus.

### Beispiel 2

Beispiel 1 wurde dahingehend abgeändert, dass anstelle des Kugelhahnes in die Austragsleitung von 50 mm Durchmesser eine Zahnradpumpe installiert wurde, die über die Druckmessung (P₂) elektronisch so gesteuert wurde, dass an der Auslassöffnung ein Druck von 1800 hPa herrschte.
Bei gleichbleibender Rotordrehzahl wurde der Durchsatz auf 800 kg/h verringert, wobei die auf die zudosierten Mengen bezogenen prozentualen Anteile der Mischungsbestandteile konstant blieben.
Das Aussehen der Masse verbesserte sich.

Die Ergebnisse finden sich in Tabelle 1.

Nach 20 Minuten bei 23°C und einer relativen Luftfeuchtigkeit von 50 % bildete die Masse eine Haut und härtete innerhalb von 7 Tagen zu einem gummielastischen Material mit einer Shore-A-Härte von 18 aus.

### Beispiel 3

Beispiel 1 wurde dahingehend abgeändert, dass die Drehzahl des Rotors auf 800 min⁻¹ reduziert und der Druck (P₂) an der Auslassöffnung auf 1800 hPa geregelt wurde. Der Durchsatz wurde auf 1200 kg/h erhöht, wobei die auf die zudosierten Mengen bezogenen prozentualen Anteile der Mischungsbestandteile konstant blieben.

Das Aussehen der Masse verbesserte sich gegenüber den vorangegangenen Beispielen weiter (Tabelle 1).

**Tabelle 1**

| Beispiel | Rotor-Drehzahl (U/min) | Durchsatz (kg/h) | Druckdifferenz (hPa) | Aussehen | Auspressrate (g/min) |
|---|---|---|---|---|---|
| 1 | 1200 | 1000 | 500 | 3 | 380 |
| 2 | 1200 | 800 | 800 | 2 | 360 |
| 3 | 800 | 1200 | 800 | 1 | 370 |

Nach 20 Minuten bei 23°C und einer relativen Luftfeuchtigkeit von 50 % bildete die Masse eine Haut und härtete innerhalb von 7 Tagen zu einem gummielastischen Material mit einer Shore-A-Härte von 18 aus.

### Beispiel 4

Beispiel 1 wurde wiederholt mit der Abänderung, dass anstelle des Polydimethylsiloxans mit Diacetoxymethylsilylendgruppen und Diacetoxyvinylsilylendgruppen ein Polydimethylsiloxan mit einer Viskosität von 80 000 mPa·s verwendet wurde, das statistisch verteilt mit Dimethoxymethylsilyl- und Dimethoxyvinylsilylgruppen im Mol-Verhältnis von etwa 1 : 1 terminiert ist.

Die Ergebnisse finden sich in Tabelle 2.

Die Masse bildete nach 25 Minuten bei 23°C und einer relativen Luftfeuchtigkeit von 50 % eine Haut und härtete innerhalb von 7 Tagen zu einem gummielastischen Material mit einer Shore-A-Härte von 20 aus.

### Beispiel 5

Beispiel 4 wurde wiederholt mit einem Gesamtdurchsatz von 800 kg/h, wobei an der Auslassöffnung ein Druck von 1800 hPa über eine elektronisch gesteuerte Austragspumpe eingestellt wurde.

Die Ergebnisse finden sich in Tabelle 2.

Die Masse bildete nach 25 Minuten bei 23°C und einer relativen Luftfeuchtigkeit von 50 % eine Haut und härtete innerhalb von 7 Tagen zu einem gummielastischen Material mit einer Shore-A-Härte von 20 aus.

**Tabelle 2**

| Beispiel | Rotor-Drehzahl (U/min) | Durchsatz (kg/h) | Druckdifferenz (hPa) | Aussehen | Auspressrate (g/min) |
|---|---|---|---|---|---|
| 4 | 1200 | 1000 | 500 | 3 | 450 |
| 5 | 1200 | 800 | 800 | 2 | 440 |

## Patentansprüche

1. Verfahren zur kontinuierlichen Herstellung von RTV-1-Massen, bei dem in einem Schritt bei einmaligem Durchgang durch die aus einem Rotor-Stator-System bestehende Mischzone eines Mischers im Wesentlichen lineare Organosiliciumverbindung mit mindestens zwei an Silicium gebundenen kondensationsfähigen Gruppen (A), Füllstoff (B) und gegebenenfalls weitere Bestandteile zusammengemischt werden, wobei der Druck am Auslass des Mischaggregates um mindestens 100 hPa größer ist als am Einlass des Mischaggregats.

2. Verfahren nach Anspruch 1, **dadurch gekennzeichnet, dass** der Druck am Auslass des Mischaggregates um mindestens 200 hPa größer ist als am Einlass des Mischaggregats.

3. Verfahren nach Anspruch 1 oder 2, **dadurch gekennzeichnet, dass** der Druck am Auslass des Mischaggregates um 300 bis 3000 hPa größer ist als am Einlass des Mischaggregats.

4. Verfahren nach einem oder mehreren der Ansprüche 1 bis 3, **dadurch gekennzeichnet, dass** Organosiliciumverbindungen (A) um solche enthaltend Einheiten der Formel
RₐY_{b}SiO_{(4-a-b)/2} (I)
handelt, wobei
R gleich oder verschieden sein kann und gegebenenfalls substituierte Kohlenwasserstoffreste, die durch Sauerstoffatome unterbrochen sein können, bedeutet,
Y gleich oder verschieden sein kann und kondensationsfähige Reste bedeutet,
a 0, 1, 2 oder 3 ist und
b 0, 1, 2 oder 3 ist,
mit der Maßgabe, dass die Summe aus a+b kleiner oder gleich 3 ist und pro Molekül mindestens zwei Reste Y anwesend sind.

5. Verfahren nach einem oder mehreren der Ansprüche 1 bis 4, **dadurch gekennzeichnet, dass** es sich bei Füllstoff (B) um Calciumcarbonate und um pyrogen hergestellte Kieselsäuren handelt.

6. Verfahren nach einem oder mehreren der Ansprüche 1 bis 5, **dadurch gekennzeichnet, dass** Vernetzer (C) eingesetzt wird.

7. Verfahren nach einem oder mehreren der Ansprüche 1 bis 6, **dadurch gekennzeichnet, dass** Zusatzstoffe (D) ausgewählt aus der Gruppe bestehend aus Katalysatoren, Haftvermittler, Weichmacher, Stabilisatoren, Rheologieadditive, Farbpigmente und Fungizide eingesetzt werden.

## Claims

1. Process for the continuous production of RTV-1 compositions, in which an essentially linear organosilicon compound having at least two condensable groups bound to silicon (A), filler (B) and, if appropriate, further constituents are mixed together in one step in a single pass through the mixing zone of a mixer which comprises a rotor-stator system, wherein the pressure at the outlet of the mixing apparatus is at least 100 hPa greater than that at the inlet of the mixing apparatus.

2. Process according to claim 1, **characterized in \that** the pressure at the outlet of the mixing apparatus is at least 200 hPa greater than that at the inlet of the mixing apparatus.

3. Process according to claim 1 or 2, **characterized in that** the pressure at the outlet of the mixing apparatus is from 300 to 3000 hPa greater than that at the inlet of the mixing apparatus.

4. Process according to one or more of claims 1 to 3, **characterized in that** the organosilicon compounds (A) are compounds comprising units of the formula
RₐY_{b}SiO_{(4-a-b)/2} (I),
where
the radicals R can be identical or different and are substituted or unsubstituted hydrocarbon radicals which may be interruped by oxygen atoms,
the radicals Y can be identical or different and are condensable radicals,
a is 0, 1, 2 or 3 and
b is 0, 1, 2 or 3,
with the proviso that the sum of a+b is less than or equal to 3 and at least two radicals Y are present per molecule.

5. Process according to one or more of claims 1 to 4, **characterized in that** the filler (B) is calcium carbonate and pyrogenic silica.

6. Process according to one or more of claims 1 to 5, **characterized in that** a crosslinker (C) is used.

7. Process according to one or more of claims 1 to 6, **characterized in that** additives (D) selected from the group consisting of catalysts, bonding agents, plasticizers, stabilizers, rheology additives, color pigments and fungicides are used.

## Revendications

1. Procédé de préparation en continu de masses RTV-1, dans lequel, dans une étape et en une seule passe dans la zone de mélange d'un mélangeur consistant en un système à rotor et stator, on mélange un composé organosilicique essentiellement linéaire comportant au moins deux groupes condensables (A) liés au silicium, une matière de remplissage (B) et le cas échéant d'autres constituants, la pression à la sortie de l'équipement de mélange étant d'au moins 100 hPa supérieure à celle à l'entrée de l'équipement de mélange.

2. Procédé suivant la revendication 1, **caractérisé en ce que** la pression à la sortie de l'équipement de mélange est d'au moins 200 hPa supérieure à celle à l'entrée de l'équipement de mélange.

3. Procédé suivant la revendication 1 ou 2,
**caractérisé en ce que** la pression à la sortie de l'équipement de mélange est d'au moins 300 à 3000 hPa supérieure à celle à l'entrée de l'équipement de mélange.

4. Procédé suivant une ou plusieurs des revendications 1 à 3, **caractérisé en ce que** les composés organosiliciques (A) sont ceux contenant des unités de la formule
RₐY_{b}SiO_{(4-a-b})_{/2} (I)
dans laquelle :
R peut être identique ou différent et représente des radicaux hydrocarbonés le cas échéant substitués, qui peuvent être interrompus par des atomes d'oxygène,
Y peut être identique ou différent et représente des radicaux condensables,
a vaut 0, 1, 2 ou 3 et
b vaut 0, 1, 2 ou 3,
à la condition que la somme de a + b soit inférieure ou égale à 3 et qu'il se trouve au moins deux radicaux Y par molécule.

5. Procédé suivant une ou plusieurs des revendications 1 à 4, **caractérisé en ce que** la matière de remplissage (B) est du carbonate de calcium et des acides siliciques préparés par pyrogénation.

6. Procédé suivant une ou plusieurs des revendications 1 à 5, **caractérisé en ce que** l'on met en oeuvre des réticulants (C).

7. Procédé suivant une ou plusieurs des revendications 1 à 6, **caractérisé en ce que** l'on met en oeuvre des additifs (D) choisis dans le groupe formé par des catalyseurs, des agents adhésifs, des plastifiants, des stabilisants, des additifs de rhéologie, des pigments colorés et des fongicides.
